(19) Europäisches Patentamt / European Patent Office / Office européen des brevets

(11) **EP 1 788 279 A2**

(12) **EUROPÄISCHE PATENTANMELDUNG**

(43) Veröffentlichungstag:
 **23.05.2007 Patentblatt 2007/21**

(51) Int Cl.:
 *F16F 15/26* *(2006.01)*

(21) Anmeldenummer: **06466015.2**

(22) Anmeldetag: **10.11.2006**

(84) Benannte Vertragsstaaten:
 **AT BE BG CH CY CZ DE DK EE ES FI FR GB GR HU IE IS IT LI LT LU LV MC NL PL PT RO SE SI SK TR**
 Benannte Erstreckungsstaaten:
 **AL BA HR MK YU**

(30) Priorität: **16.11.2005 CZ 20050717**

(71) Anmelder: **Skoda Auto a.s.**
 **293 60 Mlada Boleslav (CZ)**

(72) Erfinder: **Babak, Jan**
 **29301 Mlada Boleslav (CZ)**

(54) **Multifunktionelles Ausgleichssystem**

(57)    Das multifunktionelle Ausgleichssystem ist eine einbaugerechte kompakte dreiwellige Einrichtung mit den rotierenden und geeignet einander eingestellten behelflichen Gegengewichten, die besonders für die Befreiung der Kolbenmaschinen mit den Kurbelmechanismen von ihren natürlichen dominierenden störenden Restunwucht-Produkten bestimmt ist. Solche Anordnung der Ausgleichwellen ist fähig, eine optimale Ausgleich-Wirkung an der Maschine ohne Notwendigkeit unerwünschter beschränkender konstruktiver Kompromisse zu erzielen, was mit der vollkommenen simultanen Liquidierung von den allen, wenn auch einander phasenverschobenen störenden harmonischen Anregungskomponenten konkreter dominierender Ordnung, bedingt ist. Das Ausgleichssystem, das auf dem Prinzip hier angeführter Dimensions- und Unterbringungsregeln für die Dreiheit der rotierenden auszentrierten Ausgleichgewichte-Massen bei der harmonischen Schwingung zweiter Ordnung entworfen ist, wird in mehreren Applikationsvarianten am Beispiel eines üblichen Reihenvierzylinder-Verbrennungsmotors mit zentrischem Kurbelmechanismus in der Konfrontation mit den bekannten Ausführungen von den zweiwelligen Ausgleichssystemen vorgestellt. Die vorgelegte Lösung ist hauptsächlich für die mobilen Reihenvierzylinder-Motoren grösserer Kubatur mit langem Kolbenhub aktuell, die Monoblock-Bestandteil der in drei Punkten quergelagerten Antriebsaggregaten in den Kraftfahrzeugen höherer Klasse mit dem Frontantrieb sind.

Fig. 4

EP 1 788 279 A2

**Beschreibung**

**Bereich der Technik**

Die Erfindung betrifft die Einrichtung der zusätzlichen Ausgleichwellen einer Kolbenmaschine, die fähig sind, mehrere verschiedene störende harmonische Vibrationen gleicher Ordnung, die z.B. von der natürlichen dynamischen Unwucht eines Kurbelmechanismus' stammen, simultan zu eliminieren. Besonders geeignet ist sie für den Einbau in den Verbrennungskolbenmotoren, hauptsächlich für die Beruhigung der mobilen Reihenvierzylindern höherer Kubatur, besonders jener, die den größeren Kolbenhub haben, oder/und im Automobil in drei Punkten quer gelagert sind und mit einer Moment-Pendelstütze, die in einen schwingungsempfindlichen Vorderachshilfsrahmen verankert ist, versehen sind und damit die unerwünschte Vibrationen-Quelle, die die Insassen beschwert, darstellen.

Die vorgeschlagene Lösung erweitert die Applikationsmöglichkeiten des ursprünglichen Grundprinzips vom nachträglichen Kurbelmechanismen-Ausgleich durch ein zugegebenes, gegeneinander rotierendes Ausgleichwellen-Paar in der konkreten festen kinematischen Verbindung, das schon Dr. Frederick W. Lanchester im Jahre 1903 fundamental ableitet und entworfen hat und welches um 80 Jahre später als weiteres, das sog. "twin-shaft" verbessertes multifunktionelles System einige renommierte Automobilhersteller in die Praxis eingesetzt haben.

Das Applikationspotential der Erfindung ist besonders für derartige Konstruktionsvarianten der Motoren aktuell, bei denen bisher alle Vorzüge der ursprünglichen Lanchesterschen- und der multifunktionellen "twin-shaft" Auswuchtwellen in der üblichen traditionellen paarweisen Anordnung aus den Konstruktionsgründen nicht voll optimal ausgenutzt werden konnten, ob schon aufgrund der bedrohenden Masssenkollision einiger von der Ausgleichwellen mit dem Kurbelmechanismus der Maschine oder aus der Kompromissnotwendigkeit der Beschränkungen ihres ausnutzbaren Effektes mit der Hinsicht auf die bedeutenden und spezifischen Einbaumöglichkeiten, die schon den heutigen Bedürfnissen und gegenwärtigen Vorstellungen über ein kompaktes modernes mobiles Antriebsaggregat kaum entsprechen.

**Gegenwärtiger Stand der Technik**

Die signifikante Tendenz im gegenwärtigen Personenkraftwagen-Bau ist die ständige Eindringung des bewährten Frontantrieb-Konzeptes von den Personenkraftwagen mit dem querorientierten Monoblock-Antriebsaggregat in die immer höheren Motorkubatur-Klassen. Dies ruft jedoch bei der Applikation der üblichen Verbrennungsreihenmotoren mit den Anforderungen auf ihre Kompaktheit und auf den kritischen, genügend kurzen Einbaus ein Dilemma seitens der geeigneten Wahl einer sinnvollen Zylinder-Anzahl vom Motor hervor und disqualifiziert dadurch im voraus vom Spiel den beinahe dynamisch idealen, jedoch ungeeignet langen Reihensechszylinder. Deshalb muss man in solchem Fall aus dem Einbau-Not eine V-Mehrzylinderanordnung als Kompromiss wählen oder greift der Konstrukteur gerade zu dem, dem Reihensechszylinder seitens der dynamischen Eigenschaften nähesten und schon über die hohe natürliche Ausgewogenheit verfügenden, insgesamt einfachen und leichteren, standardmässigen leistungsäquivalenten Reihenvierzylinder. Jedoch auch hier, eben bei den Vierzylindern höheren Volumens mit den relativ längeren Kurbelarmen oder bei denen mit den grösseren Schubmassen ihrer ungleichmässig sich bewegenden vollständigen Kolben mit den zugehörigen Pleuelstangen-Massenanteilen, bleiben in Hinsicht auf ihre gesamten dynamischen Auswirkungen noch die realen Restunwuchtungen des gesamten Kurbelmechanismus' und ihre schon ausdrucksvollen vibroakustischen Erscheinungen spürbar, wobei diese mit dem Umdrehungen-Quadrat steigen. Der dringliche Bedarf ihrer Unterdrückung dokumentiert auch die Tatsache, dass solches Problem ausgerechnet bei den höheren teuersten Automobile-Klassen, wo der anspruchsvolle Kunde mit Recht seinen entsprechenden Komfort erwartet, markant ist. Manches üblich gewählte Lösungsvorgehen basiert in der Regel auf der teilweisen oder totalen Resignation auf die Beeinflussung der Anregungseigenschaften des Motors als der Schwingungen-Hauptquelle, freilich mit darauffolgender Vorgabe, seinen inzwischen sich voll dynamisch entwickelten Produkten danach mühsam und kostspielig die Stirn zu bieten. Das begründet die bekannte Applikation verschiedener passiver, vibroakustisch dämpfender oder/und dämmender Isoliermaterialien oder die Zugabe von umstimmender passiven Massen, gegebenenfalls lokaler aktiver Systeme mit den monofrequenzweise wirkenden dynamischen Tilgern. Die diesbezüglichen nachträglichen Massnahmen erhöhen jedoch nicht nur den Preis, den Arbeitsaufwand und die blind transportierte Masse des Fahrzeuges, aber sind sie auch auf die Folgen eventueller laufender Innovationsänderungen im Rahmen der Modellpflege und sowie auch auf die individuellen Ausführung-Differenzen aufgrund der vorgesehenen Vielfältigkeit der von Kunden wählbaren Produkt-Ausstattungen empfindlich. Deshalb stellt ein wesentlich sofistizierenes Vorgehen solche Vorbeugungsstrategie dar, die auf die Liquidierung der Schwingung-Ursachen direkt an ihren Geburt-Stellen, demnach am besten in ihrer prenatalen Phase, basiert.

Ein derartiges technisches Vorgehen setzt freilich die Konzept-Änderungen in der Mechanismus-Anordnung selbst und die notwendigen Eingriffe in die Grundkonstruktion schon bei ihrem Entwurf voraus. Als wirksame Mittel für den Ausgleich der dominierenden störenden Komponenten haben sich in dieser Richtung die mehr als 100 Jahre bekannten, paarweise zugegebenen und gegeneinander rotierenden Lanchesterschen ausgleichenden Behelfswellen mit fester kinematischer Verbindung ihres Antriebs gezeigt. Diese verfügen über die entsprechend dimensionierten, zur ihren Drehachsen exzentrisch angeordneten Gewichte, derer frequenz- und phasenmässig eingestellte Zentrifugalkräfte danach in einer gesamten Vektorsynthese die einzelnen unerwünschten harmonischen Restunwucht-Produkte der Maschine eliminieren. Die Lanchester-Wellen sind entsprechend der Plazierung ihrer exzentrierten Gewichte dem Motor entlang im Prinzip fähig, die störenden periodischen Schubmassenkräfte, sowie auch ihre wechselnden Längs- oder Quermomente von den aktuellen harmonischen Anregungskomponenten konkreter Ordnung am Motor, auszugleichen. Und dies, falls diese mit einem Wirkungspunkt gebundenen oder freien Vektoren zwar pulsieren, jedoch dabei ihre Richtungen beibehalten, oder umgekehrt, falls diese Richrungen ändern, jedoch ihre Grösse konstant bleibt. Obwohl das erwähnte Lanchester-Prinzip schon lange bekannt ist, lassen sich leider seine Vorzüge und besonders das multifunktionelle Potential in verbesserter Ausführung "twin-shaft" mit den einander überhöhten Ausgleichwellen, dank den streng begrenzten Konstruktionsmöglichkeiten der paarweisen Anordnung von den Ausgleichwellen in vollem Maßstab nicht ausnutzen. Dies dokumentiert auch das weiter verfolgte Beispiel eines aktuellen obligatorischen Reihenvierzylinders, der als Verbrennungsmotor im Personenkraftwagen-Bau laufend verwendet ist.

Die zentrischen Kurbelmechanismen dieses Motors, wo die Zylinder-Ebene durch die Achse der symmetrischen Kurbelwelle mit den einander paarweise gegengekröpften Kurbeln geht, haben dank ihrer günstigen Anordnung und bei den genügend gleichmässigen Motorumdrehungen, die durch das Schwungrad aufrecht gehalten sind, schon die mit den Kurbelmechanismen einzelner Zylinder dynamisch generierten Anregungskomponenten zum grössten Teil in der Summe einander entstört und diese damit auf natürlichen Wege auch ausgeglichen. Bei einem derartigen Aggregat verbleiben dann zur relativen Vollkommenheit seines Ausgleichs auf das erwünschte Niveau und zur restlichen Beruhigung der Vibrationsquelle, die über die Motor-Lagerung nach aussen einwirkt, faktisch nur zwei störende Majoritätsprodukte und dies:

a) Die dominierende harmonische Gesamtschubkraft $F^{II}$ zweiter Ordnung als die restliche Schwungkraft von den einzelnen Schubmassen **m** der separaten vollständigen Kolben, Pleuelaugen und anderen partiellen dorthin dynamisch zugehörigen Massen-Anteile. Das ist der Vektor, der auf das Gehäuse vom Motorblock **9** über die Hauptlager der Kurbelwelle **5** wirkend, an der Wirkungslinie **v-v** liegt, welche die Schnittlinie der Zylinderebene mit der Längssymmetrie-Ebene des Motors ist und hier mittig zwischen dem zweiten und dritten Motorzylinder **6**, senkrecht zur Achse der Kurbelwelle **5**, läuft. Diese Kraft $F^{II}$ pulsiert harmonisch mit doppelter Frequenz in Hinsicht zu den MotorUmdrehungen.

b) Das oftmals mit Unrecht übersehene, aber durch seine Bedeutung gar nicht zu vernachlässigende kippende Quermoment $M_q^{II}$ zweiter Ordnung, das harmonisch veränderlich ist und ebenfalls mit doppelter Frequenz, relativ zu den Motorumdrehungen, und mit einer Phasenverzögerung $2\alpha = \pi/2$ in Hinsicht auf die Störkraft $F^{II}$, pulsiert. Es hat die Eigenschaft eines freien Vektors paralleler Richtung mit der Achse von der Kurbelwelle **5** und wirkt es direkt als die zugegebene Reaktionskomponente des Aggregats in seine Lagerung in der Querrichtung.

Im Interesse, eine höhere technische Einwirkung beim verfolgten Vierzylinder-Reihenmotor zu erreichen, ist also die vollkommende, jedoch dabei konstruktiv und realisationsmässig gangbare simultane Liquidierung dieser beider Majoritätskomponenten $F^{II}$ und $M_q^{II}$ vom restlichen dynamischen Motor-Unwucht erforderlich. Wie schon vorher erwähnt, wiesen hier historisch die traditionellen Lanchester-Ausgleichwellen und ihre höhenversetzte Modifikation "twin-shaft" den Lösungsweg. Seitens bisherigen angewandten üblichen Paaranordnung-Versionen sieht gegenwärtig dieser bekannte praxisrelevante Stand der Auswuchttechnik aus, wie folgt:

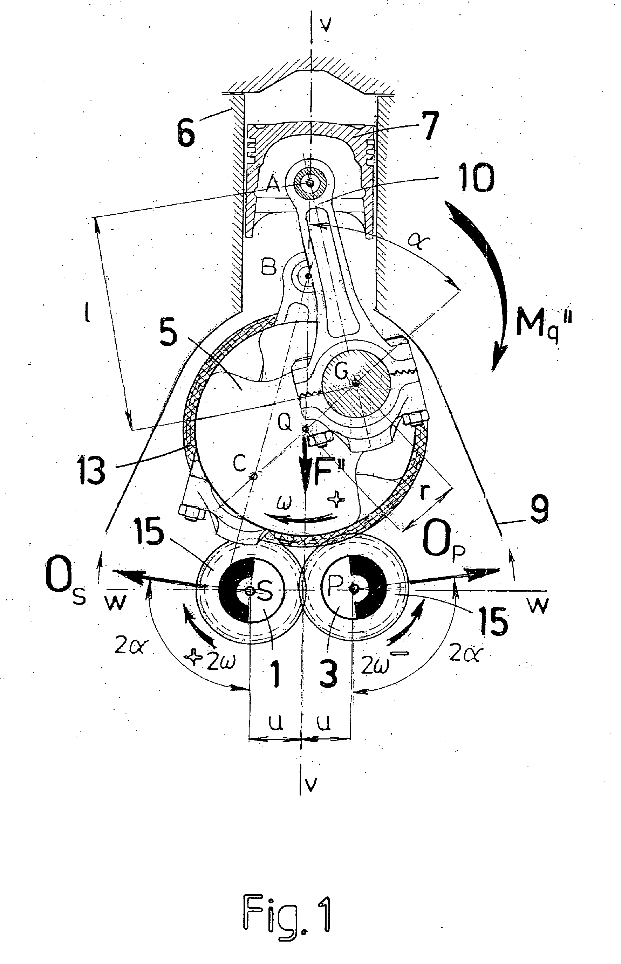

Einstweilen ist die einfachste praktizierte Lösung des Einbaus der monofunktionellen Lanchesterschen paarweisen Ausgleichwellen für die Kategorie der harmonischen Anregungen zweiter Ordnung in der zuletzt bekannten modernsten Ausführung laut Fig. 1 zu errinnern. Hier sind die Achsen von den Ausgleichwellen **1,3** gegeneinander und mit doppelter Frequenz von der Motorumdrehungen rotierend, durch ihre Schnittpunkte mit der Zeichnungssowie Ausgleichsebene veranschaulicht und dies wie als **S** bei der mitlaufenden und als **P** bei der gegenrotierenden Behelfswellen mit den auszentrierten Gewichten die Fälle sind. Diese Drehpunkte **P** und **S** der so rotierenden Ausgleichwellen **1,3** sind hier günstig im gut geschmierten Raum vom Motorblock **9** plaziert, demnach also unter der Kurbelwelle **5** und vom Motorkopf entfernt, aber dies immer beidseitig und symmetrisch zur Zeichnungsebenenspur **v-v** und in der gleichen Höhe von der Zylinderachsebene angeordnet, womit diese an einer dazu senkrechten Verbindungslinie liegen. Dabei können ihre identischen aber umgekehrt orientierten symmetrischen Abstände **u** von der Zylinderebenenspur **v-v** allgemein auch die einander negative Werte erreichen, so daß die derartigen Behelfswellen im konstruktiven Bedarfsfalle, gegebenenfalls ohne Einwirkung-Änderung auch ihre Positionen einander austauschen können. Ihr Antrieb ist hier sparsam direkt von der zentralen, hier der Kurbelwelle **5**, abgeleitet, wie folgt. Auf dem Aussendurchmesser eines Kurbelwelle- Gegengewichts des zweiten oder dritten Zylinders ist ein dünner Zahnkranz-Ring **13** mit der Aussenzahnung aufgepresst, der mit der Überetzung **(-1:2)** die unter der Kurbelwelle **5** angeordnete gegenlaufende Ausgleichwelle **3** mittels des Zahneingriffs ihres Zahnrades **15** treibt. Das so angetriebene Zahnrad der gegenlaufenden Ausgleichwelle **3** verfügt über die doppelbreite Aussenverzahnung, die mit ihrer axial überragenden Hälfte den Aussenzahneingriff mit einem weiteren, ähnlich unter der zentralen Kurbelwelle **5** situierten Zahnrad **15** besorgt und somit die Umdrehungsrichtung seiner entsprechend positionierten Ausgleichwelle **1** in eine, mit der Kurbelwelle **5** mitlaufende, durch die Übersetzung (**-1:1**) wieder reversiert. Die auszentrierten Gegengewichte beider Ausgleichwellen **1,3** generieren in der Ausgleichsebene, demnach in der Längssymmetrie-Ebene des Motors zwischen dem zweiten und dritten Zylinder, durch ihre Zentrifugalkräfte $O_S$, $O_P$ das System zwei identisch ausgiebiger, jedoch gegeneinander rotierender Vektoren mit der momentanen Vektorsumme, die immer die aktuelle Grösse $-F^{II}$ erreicht und auf der identischen Wirkungslinie **v-v** liegt und dadurch das dominierende Restunwucht-Produkt des Motors, d.h. die störende restliche harmonische Massenschubkraft $F^{II}$ zweiter Ordnung ausgleicht. Ausser diesem Effekt ist der Hauptvorteil der erwähnten Konstruktion ihre Kompaktheit, unberührte Motorlänge und die eventuelle Möglichkeit einer nachträglichen Adaptierung des Systems innen des Motorblocks **9** bei den derartig nicht vorher so geplanten Konstruktionen. Trotzdem handelt es sich hier nur um eine teilweise Lösung aus dem konstruktiven Not und mit dem nicht voll ausgeschöpften Ausgleichspotential solcher Einrichtung. Dies deshalb, weil man hier die Existenz des oben erwähnten störenden Quermoments $M_q^{II}$ ganz ignoriert. Das restliche Vibration-Komponente, nämlich das harmonische Erregermoment $M_q^{II}$ zweiter Ordnung ist jedoch eben bei den üblichen, quer und in drei Punkten im Rohbau gelagerten Reihen-Vierzylindern sehr interessant, da es sich direkt und voll in der Achsrichtung der zur Geräuschübertraung empfindlichen Moment-Pendelstütze durchsetzt. Im Gegenstand dazu wirkt die hier so ausgeglichene Schubkraft $F^{II}$ normalerweise indirekt, d.h. fast senkrecht oder unter einem sehr stumpfen Winkel zur Pendelstütze-Richtung, so dass nur ihr klein Anteil aus dem Titel der üblichen Vorlaufs des querliegenden Antriebsaggregates im Motorraum faktisch bemerkbar sei. Deshalb ist es diskutabel, ob die Erregerkraft $F^{II}$ an sich als ein Schwingungsgenerator für diese schwingungskritische Übertragungsbrücke über die Moment-Pendelstütze beim realen und durchaus unberührten Motor bedeutender ist, als beim unterschätzten Quermoment $M_q^{II}$ der Fall ist. Aus diesem Grund ist es bei Lösungen, die sich in diesem Bereich um einen markanten Beitrag bemühen, die simultane Liquidierung beider dieser Komponenten zweiter Ordnung unvermeidbar. Jedoch eben das schafft das gerade oben beschriebene erste bekannte ursprüngliche Lanchestersche monofunktionelle zweiwellige Schema in der originellen Ausführung laut Fig. 1 nicht.

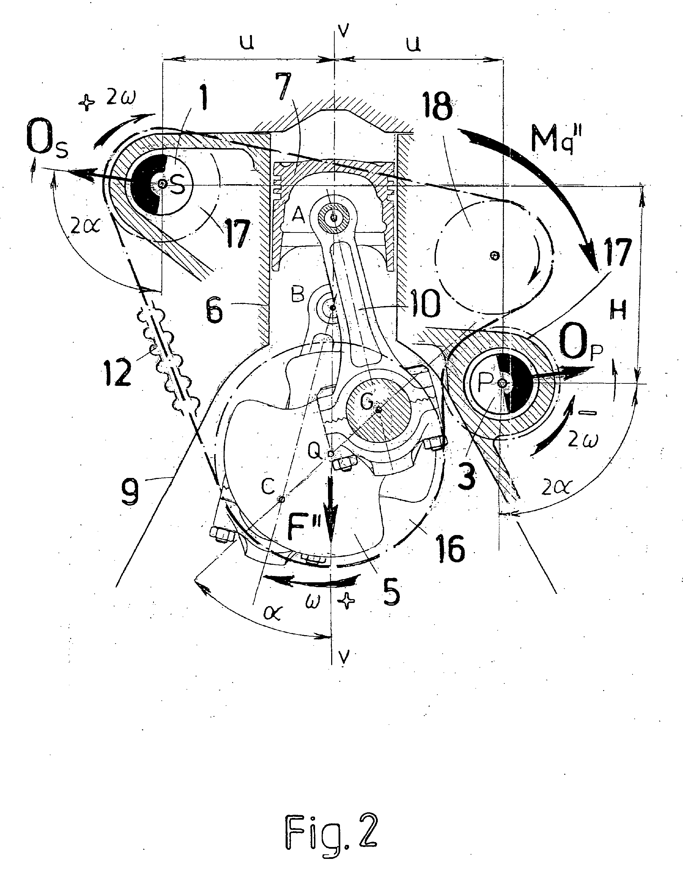

Deshalb löst besser diese Aufgabe, allerdings zu Kosten eines wesentlich komplizierteren Antriebes der Ausgleichwellen eine andere ähnliche, unter dem Begriff "twin-shaft System" bekannte, wiederum zweiwellige Durchführung mit einander orientierter Überhöhung **H** der Ausgleichwellen **1,3**. Ihr Vorzug ist gerade die theoretische Fähigkeit der vollkommenen Liquidation nicht nur der störenden Schubkraft $F^{II}$, sondern auch des störenden Quermomentes $M_q^{II}$. Eine solche Konstruktion stellt die Fig. 2, als die zweite bekannte Anordnung dieser Behelfswellen bei einem Reihen-Vierzylinder, dar. Der signifikante Unterschied im Vergleich mit dem ersten bekannten zweiwelligen Typ ist es hier demnach die schon erwähnte gegenseitige Überhöhung **H** von den Drehpunkten **S,P** beider Ausgleichwellen **1,3** in der Richtung der Zylinder-Achsen und der Zylinderebenenspur v-v entlang, womit hier einen Wirkungsarm für das Ausgleichskräftepaar $+F^{II}/-F^{II}$ besorgt. Ihre exakte ideale Grosse, allgemein durch die Anforderung $H = 2.M_q^{II}{}_{max}/F^{II}{}_{max}$ bestimmt und in die weiter angeführten Beziehungen danach eingesetzt zu sein, kommt beim laufend gewählten Kurbelverhältnis $\lambda = 0{,}3$ durch die Relation **H = 0,978 . I** heraus, also annähernd gleich wie die Pleuelstangenlänge I ist. Solche Bedingung eines optimalen mehrfunktionellen Ausgleichs ist aber laut der verfügbaren Fachquellen in der traditionellen paarweisen Version nicht ganz einfach zu erfüllen. Das Paar der Ausgleichwellen muss nämlich in solchem Falle aus den Kollisions- und anderen Konstruktionsgründen die günstige geschmierte Stelle im Motorblock **9** verlassen und wird es nach aussen und hoch, am besten neben die Zylinder situiert. Dann würde allerdings bei Einhaltung der Bedingung von der Lage-Quersymmetrie durch ein beliebiges Ausmaß **u** und bei Erzielung der exakten Grösse der Überhöhung **H** der Drehpunkte **S** und **P** beider Ausgleichwellen in Richtung der Zylinderachsen, egal wohin und wie hoch, eine ungewöhnlich breite und für den verfügbaren Fahrzeug-Einbauraum ungeeignete Aussenform des Motors, entstehen. Das Bild Fig.2 erklärt, dass dies in der Ursache einer sehr dichtbelaubten und ausgedehnten Form eines so konzipierten, nicht nur für die Querlagerung des Antriebsaggregats ungünstigen, sowie auch für die Montage von unten damit problematischen Motors steht. Dabei wird der Freiraum für die Einhaltung des örtlichen Betriebsspiels vorne und hinten seitens kollisionsfreien dynamischen Nickens des gesamten weich gelagerten Antriebsaggregates nicht erwähnt. Das wirksame zweiwellige überhöhte Konzept "twin-shaft" erlaubt auch nicht die Anwendung eines erforderlichen kompakten, geschmierten und unter dem abgedichteten Motor-Stirndeckel plazierten Antrieb-Systems. In die Erwägung kommt hier einzig der äussere kinematische rutschlose trockene Zahnriemensystem mit einer Antriebs-Zahnriemenscheibe **16** an der zentralen Kurbelwelle **5**, das mittels der gezahnten Riemenscheiben **17** und mit Hilfe gezahnter Umlaufrolle **18** die Ausgleichwellen **1** und **3** antreibt. Und dies mit dem beidseitig querbezahnten Riemen **12**, der sehr speziell, darüberhinaus geräuschvoll, sowie zum Zähne-Überspringen empfindlich ist, eine unzufriedene Lebensdauer aufweist und die Aggregatlänge vergrössert. Dabei ist es zu erwägen, dass der moderne Motor noch räumlich die Antriebe weiterer laufender Behelfsaggregate schaffen muss, was z.B. beim Alternator, Kompressor oder bei der Wasser- und Vakuumpumpe der Fall ist, den notwendigen Platz auf seinem Zylinderkopf für die Steuerung, das Saug-, Auspuff- und

Einspritzsystem abgesehend, so daß die Zugabe noch eines weiteren äusseren Antriebssystems kaum denkbar ist.

Ansonsten ist jedoch der deratig konzipiertes Zweiwellensystem funktionell sehr effektiv und ist es nachweisbar potentiell fähig, wenn auch aus dem konstruktiven Not in der Regel teilweise, beide störenden Anregungskomponente zweiter Ordnung, demnach also $F^{II}$ sowie $M_q^{II}$ auszugleichen. Die veröfentlichten Vergleichsmessungen der renommierter Firmen wiesen nach, dass ein so ausgerüsteter Vierzylinder-Reihenmotor, wenn auch in der nicht ganz optimaler Version, durch seine so kultivierte Laufruhe im Betrieb, seinem Vorbild, nämlich dem unberührten Reihen-Sechszylinder, zumindest erfolgreich konkurrieren kann. Das Verdienst am solchen Eindruck hat bestimmt auch die günstige Form seiner symmetrischen, in einer Ebene gekröpften Kurbelwelle, die bei dem Reihen-Vierzylinder den Einfluss eventueller restlicher Pleuelstangen-Trägheitsmomente, welche anders die dritte harmonische Komponente der Motorschwingungen generieren, natürlich ausgleicht.

Jedoch auch diese zweite bekannte Lösung ist trotz ihres unstreiligen technischen Niveaus wegen ihrer Komplikationen nicht problemlos.

Die Situation lösen auch nicht die komplizierteren bekannten und um gering verbesserten Variationen von den kombinierten Antrieb-Ausführungen der einander überhöhten paarweisen Ausgleichwellen, wo der empfindliche beidseitig gezahnte Riemen **12** für den Antrieb der Ausgleichwelle **1** nur durch einen einseitig querbezahnten Riemen mit günstiger Lebensdauer ersetzt wird, jedoch dieses zur Kosten von der Zugabe eines Zahnräder-Paares **15**, das die umgekehrte Drehrichtung für die gegenlaufende Ausgleichwelle **3** durch seine direkte Aussenübersetzung (**-1:1**) besorgt.

Eine lediglich nur teilweise Ausgleichswirkung erreicht auch eine weitere realisierte und nicht ganz optimale Antrieb-Lösung der paarweisen Ausgleichwellen, die beidseitig ausserhalb des Raums vom Motorblock **9** zu den Zylindern eng anliegen. Und ebenfalls diese einander überhöhten Ausgleichwellen **1,3,** als notwendiges Opfer für die Anwendung-Möglichkeit eines Kettenantriebs, die Überhöhung **H** auf eine für die Konstruktion gangbare Hälfte ihres idealen Wertes reduzieren müssen.

Insgesamt zusammengefasst, die bisher bekannten Ausführungen des Lanchesterschen Wellenpaar-Konzepts verfügen entweder über einen akzeptierbaren oder kompromissgerechten Einbau, der eine montagentaugliche Querform des Motors ermöglicht, jedoch dafür vermissen sie völlig oder teilweise die geforderte mehrfunktionelle Ausgleichsfähigkeit und entsprechen sie dadurch nicht der Vorgabe, oder sie beinahe diese Eigenschaft in der Ausführung "twinshaft" mit den beiden einnander überhöhten Ausgleichwellen erreichen, jedoch nur zu Kosten des für die Montage ungangbaren Einbaus, der den Motor dichtbelaubt ausbreitet. Und dies alles, von den weiteren konstruktiven, Geräusch- und Lebensdauerproblemen vom trockenen Antriebs solchen derartigen Ausgleichssystems abgesehen, die z.B. der fragliche quer und meistens beidseitig gezahnte trockene Zahnriemen verursacht.

Auf jeden Fall sind die konstruktiven Möglichkeiten der jeweiligen zweiwelligen Anordnung von den Ausgleichwellen nach der disponiblen Literatur praktisch nur begrenzt und nutzen sie nicht voll das Potential ihrer erforderlichen optimalen multifunktionellen Anwendung aus.

**Prinzip der Erfindung**

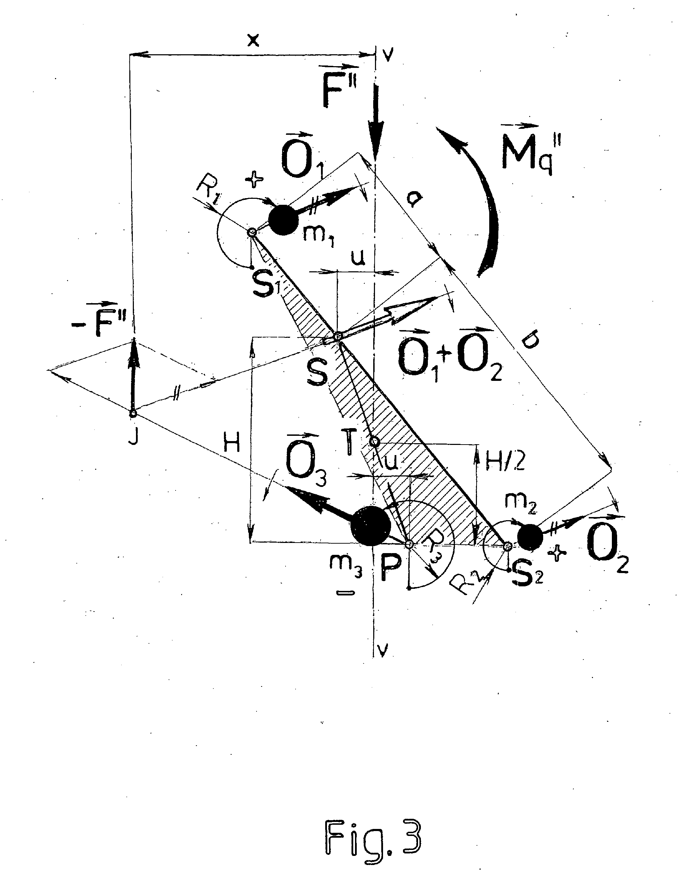

Die angeführten Mängel und die konstruktiven Potential-Beschränkungen dieser bekannten Ausführungen löst oder zum grossten Teil beseitigt das multifunktionelle Ausgleichssystem entsprechend der Erfindung, das eine Dreiheit von den selektiv kleineren und einander parallel angeordneten Ausgleichwellen beinhaltet. Diese dann, dank der Befreiung ganzer Reihe ihrer konstruktiven Wahlparameter gegenüber den oben beschriebenen bekannten Ausführungen, machen das Erreichen des vorgegebenen Ziels möglich. Die Lösung basiert auf einem erweiterten Modell der allgemein bekannten Vektorsynthese ihrer Auswirkungen, vorteilhaft mit den unterschiedlich dimensionierten Ausgleichselemente für den identischen Bereich der Massen-Anregungen zweiter Ordnung. Diese repräsentieren in der zuständigen Ebene die, seitens ihrer WinkelPhase und Antrieb-Kinematik mit dem Übersetzungssystem, fest gekoppelten und einander selektiv gegenlaufenden oder mitlaufenden, sowie mit den identischen Winkelgeschwindigkeiten $(2.\omega)$ und $(-2.\omega)$ rotierenden Vektoren, die durch drei im Motorblock **9** gelagerten Ausgleichwellen **1, 2, 3**, produziert sind. Ihre Quelle bilden die vorteilhaft einander unterschiedlichen Zentrifugalkräfte $O_1, O_2, O_3$, die in der motorsymmetrischen Ausgleichsebene zwischen dem zweiten und dritten Motorzylinder liegend, generiert sind. Dies erfolgt durch die Auswirkungen der diesbezüglichen, aus ihren Drehpunkten $S_1, S_2$ a $P$ um die Exzentrizitäten $R_1, R_2, R_3$ verlegerten Ausgleichgewichte mit den Massen $m_1, m_2, m_3$. Das Prinzip der Erreichung des resultierenden Gesamteffekts solches multifunktionellen Ausgleichssystems stellt die Abbildung Fig.3 dar. Hier wird die zuständige vektorische Synthese der momentanen Kräfteprodukte, die in diesem Augenblick, in der konkreten Glieder-Konfiguration, hier annähernd beim Kurbelwellenwinkel $\alpha \approx$ **120°** der zentralen Kurbelwelle **5**, auf den relevanten Körper des Motorblocks 9 bei der Anregungen zweiter Ordnung wirken, ersichtlich. Hier wird die Ausgleichwelle **3** mit dem Ausgleichgewicht mit der Masse $m_3$ und mit der Exzentrität $R_3$ als die einzige gegenrotierende gewählt und ihre Achse mit ihrem Spurpunkt **P** in der Zeichnungsebene so als der einzige Wirkungspunkt eines umgekehrt rotierenden Ausgleichsvektors bleibt. Die übrigen, einander in der identischen Winkelphase eingestellten Ausgleichwellen **1, 2** mit den Ausgleichmassen $m_1, m_2$ und mit den Exzentrizitäten

$R_1$, $R_2$ gegen den Spurpunkten $S_1$, $S_2$ ihrer Rotationsachsen in der Zeichnungsebene vesehend zu sein, repräsentieren dann ein doppelschnell rotierendes und mit der zentralen Kurbelwelle **5** mitlaufendes Vektorsystem. Die Kraftauswirkungen der Zentrifugalkräfte $O_1$, $O_2$ beider mitlaufenden Ausgleichwellen **1, 2** mit dem gegenseitigen Achsabstand von der Grösse (**a + b**) setzen sich dann in jedem Augenblick und auch in jeder Lage in einen einzigen, mit ihnen in der gleichen Phase mitrotierenden resultierenden Ergebnisvektor $(O_1 + O_2)$ zusammen, wobei dieser zwischen der beiden Wirkungslinien der Kräfte $O_1$, $O_2$ liegt und somit ihre momentane Entfernung im reziproken Verhältnis ihrer Grösse, demnach in der Relation **a:b** verteilt. Da dieses Verhältnis ohne Rücksicht auf die momentane Grösse des Umdrehungswinkels $\alpha$ der ersten Kurbel immer konstant bleibt und weil auch die Drehpunkte $S_1$, $S_2$, die auf den beiden Seiten von der Zylinderebenenspur **v-v** angebracht sind und sie auch für die am Motor fest gelagerten Punkte gelten, bedeutet es, dass sich auch der Ergebnisvektor $(O_1 + O_2)$ in der Zeichnungsebene um einen stabilen, jedoch nur imaginären immateriellen Wirkungspunkt **S** dreht. Dieser starre Drehpunkt **S** einer virtuellen Rotationsachse von der Resultierenden solcher Vektor-Summe des mitlaufenden Systems teilt demnach den Abstand zwischen der Spurpunkte $S_1$, $S_2$ in der Zeichnungsebene auf die partiellen Abschnitte **a** und **b**, die mit dem reziproken Grössen-Verhältnis ihrer statischen Ausgleichgewichte $m_1.R_1$ und $m_2.R_2$ durch die im Absatz Übersicht Bezeichnungen weiter eingeführten Formel definiert sind. Da die Lage des Drehpunkts **S** von den zugehörigen statischen Ausgleichgewichten $m_1.R_1$ und $m_2.R_2$ der Ausgleichwellen **1,2** proportionell enspricht, gilt dieser Drehpunkt **S** analogisch auch für den Schwerpunkt beider Drehpunkte $S_1$, $S_2$ mit den zugehörigen Gewichten $m_1.R_1$ und $m_2.R_2$.

Weiter gelten für den konstruktiven Entwurf der Drehpunkte **S** und **P** alle weiteren bisherigen Regeln des Einbaus wie bei dem Ausgleichssystem vom Typ "twin-shaft" der Fall ist. Also wie ihre symmetrischen Entfernungen **u** von der Zylinderebenenspur **v-v,** die gewöhnlich durch die Wahl vom Drehpunkt **P** der gegenrotierenden Welle **3** vorbestimmt, so auch ihre gegenseitige durch nichts behinderte Distanz **H** in der Spurrichtung **v-v,** annähernd bis Länge **l** der Pleuelstange **10** reichend, müssen gleichzeitig im Interesse der Ergebnis-Qualität respektiert werden.

Ebenso auch hier gilt die Regel von der Wirkung-Äquivalenz der zur Zylinderebenenspur v-v einander spiegelorientierten Konstruktionen.

Das vorgelegte multifunktionelle Ausgleichssystem mit den Ausgleichwellen 1,2,3. bilden also die drei einander entsprechend phaseneingestellte und in der Ausgleichsebene um ihre Drehpunkte $S_1$, $S_2$, **P** selektiv in beiden Richtungen gegen- und mitrotierenden Zentrifugalkräfte mit der Summargrösse

$$O_3 + O_1 + O_2 = F^{II}_{max} = 4.K_{II}.m.r.\omega^2 ,$$

was nach dem Einsatz im Sinne der oben angeführten Regel die Anforderung $m_3.R_3.(- 2.\omega)^2 + m_1.R_1.(2.\omega)^2 + m_2.R_2.(2.\omega)^2 = 4.K_{II}.m.r.\omega)^2$ generiert. Unter der Voraussetzung des Ausgleichs von der harmonischen Anregung zweiter Ordnung bekommt dann man die Grundbedingung für die Ausgleichgewichte-Dimensionierung ganzer Wellen-Dreiheit, wie folgt

$$m_3.R_3 + m_1.R_1 + m_2.R_2 = K_{II}.m.r$$

Die erwähnte Symmetrie-Notwendigkeit von der Plazierung beider Ergebnisvektoren gegenüber Zylinderebenenspur **v-v**, als der Wirkungslinie des Erregers $F^{II}$, die durch den gleichen, jedoch umgekehrten Abstand **u** der Drehachsen beider separaten gegeneinander rotierenden Ausgleichssysteme dargestellt ist und diese in der Zeichnungsebene durch die Lage der Drehpunkte **S** und **P** definiert zu sein, hat auch die Konsequenzen seitens der mathematischen Wahlbedingungen. Dann muss es separat und symmetrisch als $m_1.R_1 + m_2.R_2 = K_{II}.m.r/2$ gelten und gleichzeitig auch als $m_3.R_3 = K_{II}.m.r/2$ sein, so daß für die Dimension-Wahl der Ausgleichgewichte des Systems bedeutet $m_3.R_3 = m_1.R_1 + m_2.R_2 = K_{II}.m.r/2$, was die ursprünglichen streng beschränkenden Randbedingungen der konstruktiven Wahl bei den Lanchester-Paarwellen deutlich befreit.

Werden diese mathematischen Gleichungen zusammengefasst, representieren diese in einer geometrischen Interpretation das Merkmal, dass beim vollkommenden multifunktionellen Ausgleich der Schwerpunkt **T** aller in den Drehpunkten konzentrierten zugehörigen statischen Ausgleichgewichte, d.h. aller Spurpunkte der Drehachsen von den verwendeten Ausgleichwellen **1, 2, 3** in der Ausgleichsebene, was die als $S_1$, $S_2$, **P** bezeichnet sind und diese mit den zu ihnen zugehörigen Gewichten, die ihren statischen Ausgleichgewichten $m_1.R_1$ , $m_2.R_2$ und $m_3.R_3$ entsprechen, versehend sind, eben an der Zylinderachsebene, demnach auf ihrer Spur **v-v** in der Ausgleichsebene liegt und er auch dabei den Abstand zwischen den Drehpunkten **S** und **P** halbiert. Der so definierte Schwerpunkt **T** des dreiwelligen Ausgleichssystems muss sich dabei gerade in der Hälfte **H/2** der vorgegebenen Überhöhung **H** über dem Drehpunkt von der Achse der einzelnen gegenrotierenden Ausgleichwelle **3** in der Zylinderachsrichtung, zum Motorkopf gemessen, befinden. Die Befreiung der konstruktiven Randbedingungen für die Antriebsschema-Entwürfe dokumentiert die Tatsache, dass für die Drehpunkte $S_1$, $S_2$ der mitlaufenden Ausgleichwellen **1, 2** mit ihrem Achsabstand **(a+b)**, die mit dem Vorteil beidseitig vom Zylinderebenenspur **v-v** plaziert sind, keine beschränkende Symmetrie-Plicht bedroht, wobei diese auch ihre Abstände auf jeden Fall auch von der vorher gewählten Entfernung **u** des Drehpunkts **P** unterschiedlich haben können. Das entspricht dem konstruktiven Vorhaben, einen möglichst dichten Umbau der disponiblen Aussenkontur der ausgeglichenen Maschine mit den beheflichen Ausgchleichwellen von aussen zu erreichen und dadurch auch die Kompaktheit im Ganzen zu erzielen. Die mehrfache Ausgleichsfunktion des eben beschriebenen Dreiwellensystems erfolgt selbst beim Ausgleich der harmonischen Schwingungen zweiter Ordnung am erregten Motorblocks **9** laut Fig. 3 wie folgt:

Die zusammenarbeitenden, parallel und mit der zentralen Kurbelwelle **5** mitlaufenden, jedoch zweimal schneller rotierenden Ausgleichwellen **1** und **2** generieren in ihrer Lagerungen im Motorblock 9 die Zentrifugalkräfte $O_1$, $O_2$, die durch ihre Synthese in der Ausgleichsebene in jedem Augenblick den resultierenden konstanten Vektor $(O_1 + O_2)$ bilden, der sich auf gleiche Weise betreffs der Richtung, Winkelgeschwindigkeit und auch seitens des Phasenwinkels der Rotation um die immaterielle imaginäre Achse in seinem Wirkungspunkt, der als Drehpunkt **S** bezeichnet ist, dreht. Eben der imaginäre Charakter dieser virtuellen Drehachse vo der Resultierenden beider mitlaufenden Vektoren $(O_1 + O_2)$ begründet die gesuchte Chance, die Massenkollision potentiell störender Bestandteile des Motors dadurch zu erobern und damit die Perspektive den neuen weiteren konstruktiven Kreationen zu eröffnen.

Dagegen die gegenlaufende, wiederum zweimal schneller rotierende und auch in ihrem Motorblock **9** drehgelagerte opposite Ausgleichwelle **3** generiert in der identischen Ausgleichsebene die Zentrifugalkraft $O_3$ ganz allein. Die so geborenen Kräfte $O_1$, $O_2$ und $O_3$ legen sich einander im gegebenen Augenblick im momentanen Kreuzungspunkt **J** vektorisch zusammen. Dies mit Ergebnis, dass sie in der Richtung Zylinderebenenspur **v-v** gerade die Gegenkraft $-F^{II}$ bilden, die dank der Überhöhung **H** in geeigneter Richtung von der Wirkungslinie **v-**v der Kraft $+F^{II}$ um den momentanen Arm **x**, verlegt ist. Dieses Produkt $-F^{II}$ der Ausgleichwellen-Dreiheit gleicht also in jedem Augenblick nicht nur die störende Kraft $+F^{II}$, die anders über die Lager zentraler Kurbelwelle **5** am Motorblock **9** und über seine Lagerung nach aussen wirkt, sondern auch auf dem Prinzip eines Kräftepaares $+ F^{II}/- F^{II}$ mit dem Arm **x** noch das phasenveschobene störende Quermoment $M_q^{II}$ gleicher zweiter Ordnung, das anders den Motorblock **9** an seinen elastischen Lagerung-Stellen im Wagen in der Querrichtung vibroakustisch belastet, hier auch total ausgleicht.

**Vorteile der Lösung laut Erfindung.**

Obwohl das dreiwellige Ausgleichsssystem seiner Benennung entsprechend im Vergleich mit der laufenden zweiwelligen Ausführung komplizierter zu sein scheinte und anschaulich nur ein Teil zufügt, sei es praktisch nicht der Fall. Es bietet nämlich neben dem Ausgleichseffekt-Optimum auch die Reihe von den konstruktiven Vorteilen und Vereinfachungen an. Bei der dreiwelligen Ausführung bleibt nämlich trotzdem die Steuerräder-Anzahl vom Antrieb des Ausgleichssystem identisch oder sogar kleiner, als die zweiwellige Lösung "twin-shaft" anbietet. Dabei bleibt praktisch der einzige konstruktive Unterschied zwischen dem sparsamsten bekannten zweiwelligen und dreiwelligem Ausgleichssystem laut Erfindung nur in dem Sinne übrig, dass man die ursprüngliche dynamisch unaktive kurze Welle mit dem bei der zweiwelligen Version notwendigen Umlaufrad als die dritte aktive behelfliche Ausgleichwelle benutzt und diese nur bis zur Ausgleichsebene der Maschine verlängt wird. Bei der dreiwelligen Ausführung werden darüberhinaus das System selbst, so auch die dimensionell schlänkeren Ausgleichwellen, vorteilhaft vorwiegend unten der Maschinenmechanismus eng plaziert, damit das so ausgeglichene Mechanismus einbauweise sparsam bleibt. Der Kettenantrieb, zum äusseren und inneren Ketteneingriff tauglich zu sein, stellt das genügend geschmierte Übersetzungssystem dar und kann innen des Motors unter seinem Stirndeckel vollgekapselt werden. Der Kettenantrieb bietet auch die anderen komparativen Vorteile, z.B. die Abseitigung eines hier vergeblichen Umlaufrades oder seine potentielle Integrierung mit dem Ölpumpe-, Wasserpumpe- oder Generator-Antrieb in einem gemeinsamen Kettenübersetzung-Kreis.

Ein technologisch wesentlicher Vorteil ist es her ebenfalls auch die Tatsache, dass die Ausgleichgewichte $m_1.R_1$ , $m_2.R_2$ der paarweise mitrotierenden synchronisierten Ausgleichwellen **1, 2** gegenüber dem "twin-shaft" System, wo $m_1.R_1 = m_3.R_3$ streng vorgeschrieben ist, her dimensionell vorteilhaft entsprechend der Beziehung $m_1.R_1 + m_2.R_2 = m_3.R_3$ aufgeteilt sind, was die Chance gibt, die technologisch progressiven, einfachen und schlanken Ausgleichswelle **1, 2** über die gesamte Motor-Länge auf Basis des Rohrkonzepts mit kleinem Aussendurchmesser durchzuziehen und diese mit einem exzentrischen prismatischen Profil mit einer variierten Innenkontur zu versehen.

Der Hauptvorteil der dreiwelligen Konstruktion laut der Erfindung ist ihre Variabilität, Einbauflexibilität und durch den Abbau einiger früher beschränkenden Randbedingungen auch die mögliche grössere konstruktive Buntheit, was die Erreichung solch schlanker Motor- und Aggregat-Aussekonturen ermöglicht, die bei der zweiwelligen Einrichtungen bisher nicht realisierbar sind. Und dies mit der Garantie des bestmöglichen Effektes beim vollkommenen Massenausgleich des Reihenvierzylinders bis und einschliesslich der dominierenden harmonischen Anregungen zweiter Ordnung, so dass solcher Motor im Betriebsregime, bei den hohen Umdrehungen und bei den niedrigen Frequenzen nicht nur durch die Einbau-, Gewichts- und Kostenvorteile sondern auch dynamisch durch seine kultivierte Laufruhe, sogar seinem Vorbild, nämlich dem leistungsäquivalenten Reihensechszylinder, erfolgreich konkurrieren kann.

**Übersicht der Abbildungen auf den Zeichnungen**

Die Erfindung wird näher mit Hilfe der beigelegten Abbildungen erklärt, wo Fig. 1 in der Frontprojektion die erste bekannte standarde Konstruktion eines zweiwelligen Ausgleichssystems von der Reihenvierzylinder-Kolbenmaschine mit den üblichen monofunktionellen Manchester-Ausgleichwellen schematisch darstellt.

Die Abbildung Fig.2 beschreibt auf gleiche Weise das ähnlich bekannte und ebenfalls zweiwellige, jedoch dafür schon multifunktionelle System als den zweiten, höchsten bekannten Stand der Ausgleichtechnik, der auch als "twin-shaft system" bezeichnet ist.

Das Bild Fig.3 erklärt auf dem Vektorkraft-Schema das Prinzip und die Funktion des multifunktionellen Ausgleichs der restlichen harmonischen dynamischen Produkte zweiter Ordnung an der Kolbenmaschine durch drei Ausgleichwellen laut der Erfindung und wird es hier näher die Weise gebracht, wie aufgrund der VektorSynthese ihrer Auswirkungen ein gesamter theoretisch idealer Ausgleichseffekt in jedem allgemeinen Augenblick erfolgt.

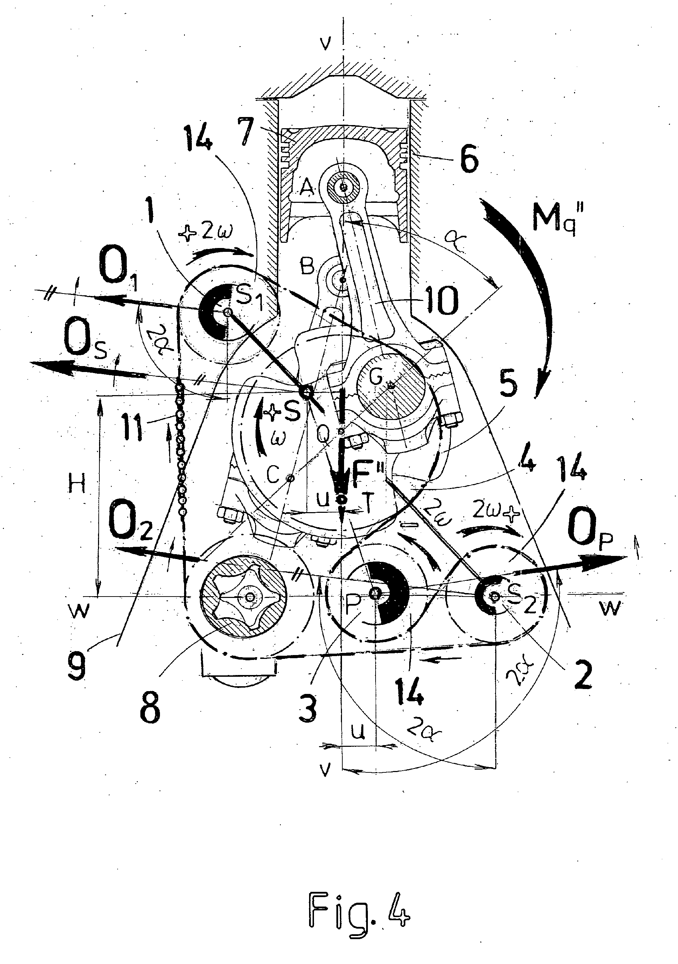

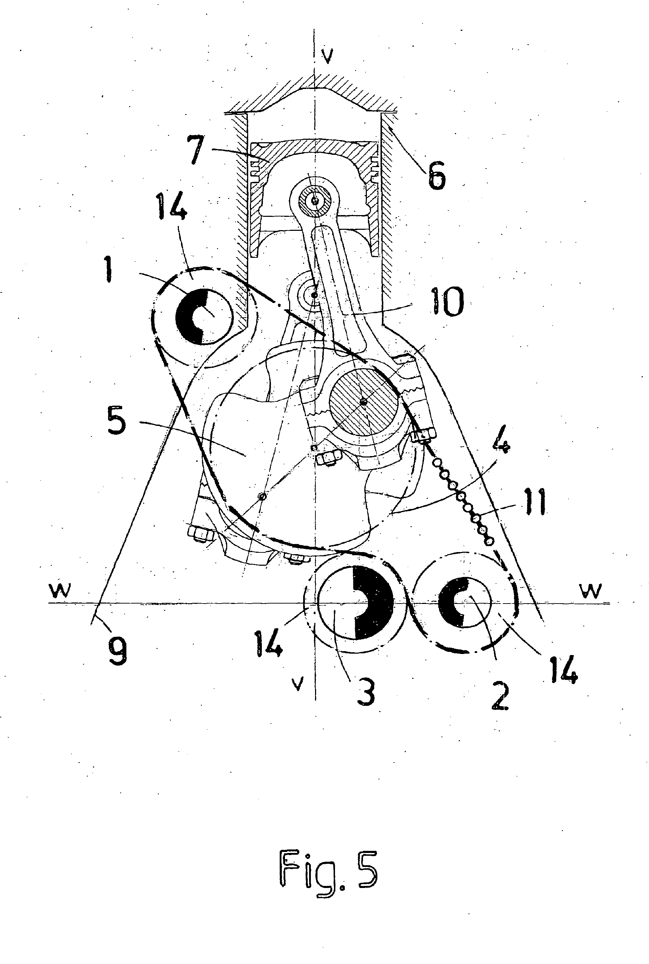

Das Bild Fig.4 stellt in der Frontansicht ein weiteres Schema eines möglichen Antriebs der Ausgleichwellen-Dreiheit von der Kurbelwelle durch eine Rollen-oder Büchsenkette dar, der gleichzeitig auch für die Ölpumpe dient, gegebenenfalls mit einer anderen Antrieb-Philosophie der Kettenräder-Anordnung auch ohne sie, wie die Darstellung Fig. 5 veranschaulicht.

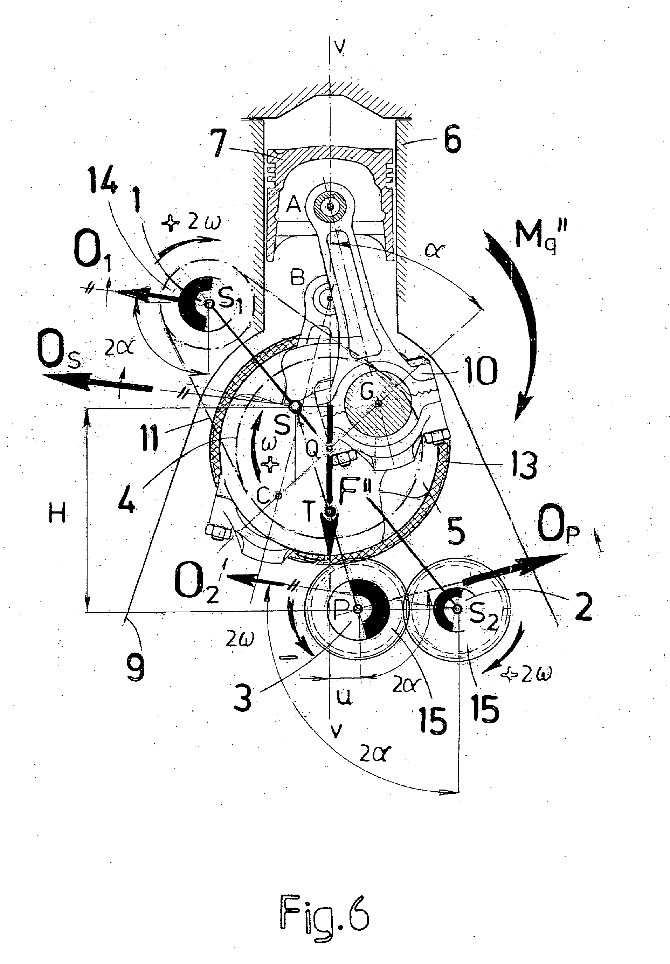

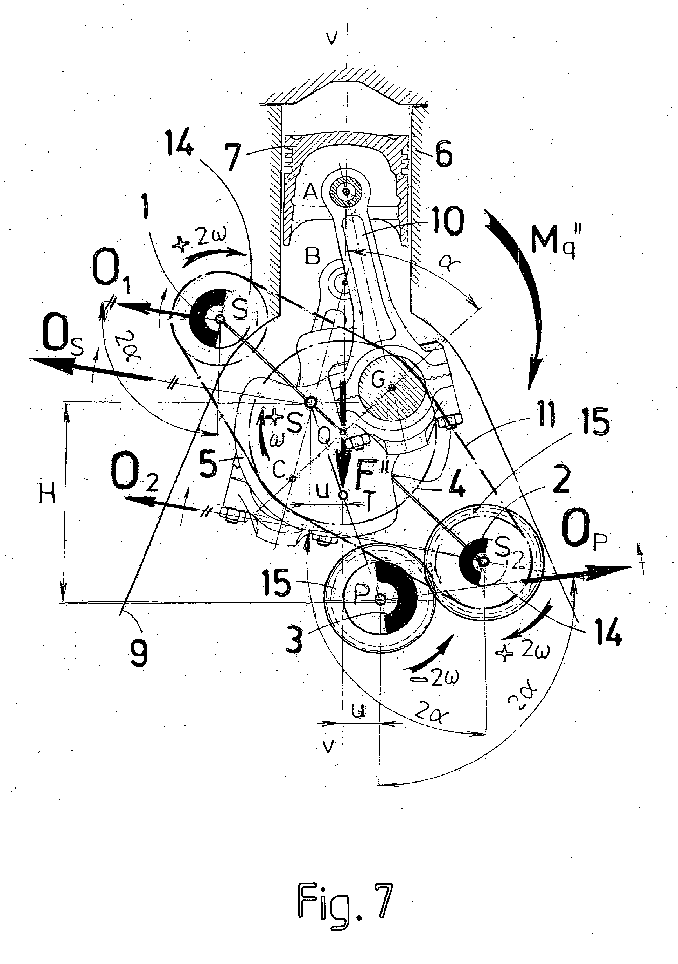

Auf dem Bild Fig. 6 wird die konstruktive Variante gezeigt, wie die Ausgleichwellen-Dreiheit von der Motor-Kurbelwelle mit Hilfe der Zahnräder in Kombination mit einer Kettenübersetzung anzutreiben, was auch noch in einer weiteren ähnlichen Version auf der weiteren Abbildung Fig. 7 dargestellt ist.

**Ausführung-Beispiele laut Erfindung**

Die Beispiele der neuen konkreten dreiwelligen und der Erfindung entsprechenden konstruktiven Ausführungen sind in einigen Varianten von den möglichen Antriebsschemen der Ausgleichwellen **1**, **2, 3** von der zentralen Kurbelwelle **5** auf den Abbildungen Fig.4, Fig.5, Fig.6 und Fig.7 dargestellt.

Die erste solche konstruktive Anordnung dokumentiert auf Fig.4 die Frontansicht und teilweise den Querschnitt durch die Achse des ersten Zylinders **6** mit dem Kolben **7**, gebolzten in der Augenmitte **A** mit der Pleuelstange **10**. Diese verfügt über die Pleuellänge **l**, und ist sie auf ihrem zweiten Pleuelkopf-Ende mit dem Mittelpunkt **G**, um die Kurbelarmlänge **r** gegenüber der Kurbelwellenmitte **Q** als der Projektion von der Kurbelwellenachse in die Zeichnungsebene, desaxiert zu sein, auf dem Kurbelzapfen gelagert. Die Kurbel des ersten Zylinders ist momentan aus ihrer Grundlage im oberen Totenpunkt des Kolbens **7** um den Winkel $\alpha$ verdreht, aber sonst dreht sie sich hier rechtslaufend, d.h. in der Richtung von der Uhrzeiger-Bewegung mit der quasikonstanten Winkelgeschwindigkeit $\underline{\omega}$. Mit doppelter Winkelgeschwindigkeit **2**$\omega$ in den beiden möglichen Richtungen drehen sich dann ihrer Umschlingung entsprechend die Kettenräder **14** mit der Rollen-oder Büchsenkette **11** die die Ausgleichwellen **1**, **2** und **3**, von dem Kettenrad **4** der zentralen Kurbelwelle **5** antreiben und zwar mit den diesbezüglichen kinematisch stabilen Übersetzungen **1:2** und (**-1:2**). Diese Antriebsvariante der Ausgleichwellen durch eine einreihige Kettenübersetzung beinhaltet gleichzeitig auch den Antrieb der Ölpumpe **8**. Es ist ersichtlich, dass die derartige Konstruktion potentiell einfach ist und bietet sie auch mit dem Vorteil für die moderne Motor-Konzepte vom Typs "bed plate" die technologisch verlangte Trennebene **w-w** des integrierten Hauptlager-Unterdeckels von der zentralen Kurbelwelle **5** an, die Tendenz, die Kettenantrieb-Unterbringung überwiegend unten im Motorblock **9** zu preferieren, dabei voll berücksichtigend.

Die zweite mögliche Variante vom Antriebssystem der identischen Ausgleichwellen **1**, **2** und **3** durch die Kette **11** und das Kettenrad **4**, diesmal aber ohne Ölpumpe **8**, stellt Fig.5 vor. Das Antriebsschema ist hier damit auffallend, dass jedes Glied der Kette **11** im laufe eines ihrer vollständigen Umlaufs mit dem Antriebskettenrad **4**, zweimal in den Eingriff kommt. Der Entwurf einer solchen Kettenübersetzung mit dem doppelten Eingriff und die Auslegung eines Antriebkettenrades **4** solcher Eigenschaften kann freilich bei den längeren Ketten in Hinsicht auf ihr Durchziehen während Betriebs potentiell problematisch sein. In solchem Falle bringt die Abhilfe das zweirehige Antriebskettenrad **4** mit der in der Axialrichtung versetzten Verzahnung und die Trennung des langen Kettenantrieb ins zwei unabhängige, axial versetzte kürzere einfache Kettenkreise. Einen von denen bilden dann die zentrale Kurbelwelle **5** mit dem Kettenrad **4** gemeinsam mit der Ausgleichwelle **1** und mit ihrem Kettenrad **14** und den zweiten stellt der unabhängige axial versetzte Kreis mit der zentralen Kurbelwelle **5** und mit dem Kettenrad **4**, mit den übriggebliebenen Ausgleichwellen **3, 2** einschliesslich ihre Kettenräder **14** dar. Es ist offensichtlich, dass derart vorgeschlagene zwei separate Kettenkreise gegebenenfalls auch umgekehrt in einen integriert werden können.

Die dritte mögliche kombinierte konstruktive Antriebsvariante der Ausgleichwellen **1**, **2** und **3** wird auf Fig. 6 dargestellt. Hier wird an die potentielle Adaptierung des jeweiligen bekannten monofunktionellen zweiwelligen Lanchester-Ausgleichssystems gemäß Fig.1 in die multifunktionelle dreiwellige laut Erfindung gedacht. Und zwar mit dem Ziel, auch diese in der Praxis genug überprüften Ausgleich-Konzepte auf ein technisch höheres Niveau nachträglich bringen zu können. Für den Antrieb der gegenrotierenden inneren Ausgleichwelle **3** wird deshalb ein zugerichtetes Derivat der vorne beschriebenen bekannten Konstruktion mit einem treibenden Zahnkranz **13** auf der zentralen Kurbelwelle **5** laut Fig.1 verwendet, einschliesslich der Lage- und Dimension-Korrekturen der ebenfalls auf bekannte Weise durch die Zahnräder **15** betriebene und mitlaufende Ausgleichwelle **2.** Darüberhinaus bleibt hier einem nur die dritte Ausgleichwelle **1** zuzubauen und diese extra durch eine besondere Kettenübersetzung mittels der Kettenräder **4, 14** und mit der Kette **11** an der Motor-Stirnseite zu betreiben. Im Bedarfsfalle kann man auch hier einen Antrieb für die Ölpumpe **8** in diese Kettenübersetzung, dem Muster auf Fig. 4 entsprechend, einfach eingliedern.

Die vierte potentiell mögliche und aktuelle Alternative von der Antrieb-Ausführung der Ausgleichwellen-Dreiheit **1**, **2** und **3** bringt Fig.7 näher. Hier sind alle einander mitlaufenden Wellen **1**, **2** und **5** mit dem Antriebskettenrad **4** und mit einem Paar getriebener Kettenräder **14** kinematisch zweimal verbunden, uzw. durch die Rollen-oder Büchsenkette **11** entsprechend der zweiten Variante, wobei die gegenrotierende Ausgleichwelle **3** von der Ausgleichwelle **2** dank dem Paar der aussengezahnten Räder **15** mit der Übersetzung (**-1:1**) umgekehrt getrieben wird. Dieses so präsentierte dreiwellige Antriebsschema erinnert an eine bekannte kombinierte zweiwellige Ausführung vom Typ "twin-shaft" mit einem einseitig gezahnten trockenen Riemen und mit den Zahnrädern, jedoch mit dem Unterschied, dass es hier ein Antriebsrad erspart wird und der ursprüngliche trockene Riemenantrieb vorteilhaft durch eine kompakte und geschmierte Kettenausführung ersetzt wird.

Es bieten sich noch die weiteren, gut vorstellbaren und realisierbaren, hier nicht erwähnten Antriebsvarianten der Ausgleichwellen-Dreiheit.

Es ist zu ergänzen, dass eventuell auch die identisch funktionierenden, zur Schnittlinie **v-v** spiegelorientierten Schemen der Ausgleichwellen **1**, **2** und **3,** hinsichtlich der oben erwähnten, falls Bedarf, vorhanden sind. Die Funktion des Systems bleibt ebenso auch bei umgekehrter Umdrehungsrichtung der zentralen Kurbelwelle **5** von der Maschine beibehalten.

Die gemeinsame Eigenschaft der hier präsentierten Lösungen ist lediglich nur die schematische Darstellung ihrer Kettenantriebssysteme ohne weitere, gegebenenfalls notwendige ergänzende Teile wie z. B. die beruhigenden Gleitelemente oder die Spannglieder an den entsprechenden Kettenantrieb-Stellen der Fall sind.

### Industrielle Verwendbarkeit

Die Konstruktion laut Erfindung ist aktuell besonders für den Ausgleich der einbaubeschränkten mobilen leistungsfähigen Vierzylinder-Reihenmotoren grösserer Volumens mit den markanten Schwingungseffekten von ihren natürlichen restlichen störenden dynamischen Wirkungen. In die Erwägung kommen besonders die Vierzylinder-Reihenmotoren ab Kubatur etwa 2 Liter höher, die in drei Punkten im Wagen quer gelagert sind und dabei mit einer Moment-Pendelstütze versehen sind. Besonders aktuell ist dieses Thema für die luxeriöseren Personenkraftwagen höherer Klasse mit dem Frontrantrieb.

### Übersicht der Bezeichnungen und mathematischer Definitionsbeziehungen

| 1 | Die mit der zentralen Kurbelwelle **5** mitlaufende Ausgleichwelle |
|---|---|
| 2 | Die mit der zentralen Kurbelwelle **5** mitlaufende Ausgleichwelle |
| 3 | Die gegen die zentrale Kurbelwelle **5** gegenlaufende Ausgleichwelle |
| 4 | Antriebskettenrad der zentralen Kurbelwelle **5** |
| 5 | Zentrale Kurbelwelle der Maschine |
| 6 | Zylinderblock |
| 7 | Kolben vollständig |
| 8 | Ölpumpe |
| 9 | Motorblock |
| 10 | Pleuelstange |
| 11 | Rollen- oder Buchsenkette |
| 12 | beidseitig quer gezahnter Riemen |
| 13 | Zahnkranz der Kurbelwelle |
| 14 | getriebenes Kettenrad der Ausgleichwellen |
| 15 | Zahnrad der Ausgleichwellen |
| 16 | gezahnte Antriebsriemenscheibe |
| 17 | getriebene gezahnte Riemenscheibe der Ausgleichwellen |
| 18 | gezahnte Umlaufriemenscheibe |
| a | Abstand des Drehpunkts $S_1$ von der mitlaufenden Ausgleichwelle **1** vom resultierenden Drehpunkt **S** des ganzen |

mitlaufenden Systems, bestimmt durch die Beziehung

$$a = m_2.R_2 .(a + b) / (m_1.R_1 + m_2.R_2)$$

**b**  Abstand des Drehpunkts $S_2$ von der mitlaufenden Ausgleichwelle **2** vom resultierenden Drehpunkt **S** des ganzen mitlaufenden Systems, bestimmt durch die Beziehung

$$b = m_1.R_1 .(a + b) / (m_1.R_1 + m_2.R_2)$$

**l**  Pleuelstangenlänge

**m**  Schubmasse der dem Kolben zuständigen Teile eines Zylinders

**$m_1$**  auszentrierte Masse des Ausgleichsgewichts von der mitlaufenden Ausgleichwelle 1, rotierend um die Achse, die sich in der Zeichnungsebene als der Drehpunkt $S_1$ projektiert

**$m_2$**  auszentrierte Masse des Ausgleichsgewichts von der mitlaufenden Ausgleichwelle **2**, rotierend um die Achse, die sich in der Zeichnungsebene als der Drehpunkt $S_2$ projektiert

**$m_3$**  auszentrierte Masse des Ausgleichsgewichts von der gegenlaufenden Ausgleichwelle **3**, rotierend um die Achse, die sich in der Zeichnungsebene als der Drehpunkt **P** projektiert

**r**  Kurbelarmlänge

**u**  Entfernung der resultierenden Drehpunkten S,P von der Zylinderebenenspur **v-v**

**v-v**  Spur der Zylinderebene einer Reihen-Kolbenmaschine in der Zeichnungsebene und dabei auch die Wirkungslinie der störenden freien Massenschubkraft $F^{II}$

**w-w**  Spur der unteren technologischen Trennebene vom Motorblock **9** in der Zeichnungsebene

**x**  momentaner Wirkungsarm des ausgleichenden Kräftepaars $+ F^{II}/- F^{II}$

**A**  Projektionspunkt der Kolbenbolzenachse des ersten und vierten Zylinders in die Zeichnungsebene

**B**  Projektionspunkt der Kolbenbolzenachse des zweiten und dritten Zylinders in die Zeichnungsebene

**C**  Projektionspunkt der Achse vom Pleuelstangenzapfens des zweiten und dritten Zylinders in die Zeichnungsebene

**G**  Projektionspunkt der Achse vom Pleuelstangenzapfens des ersten und vierten Zylinders in die Zeichnungsebene

*$F^I$*  freie harmonische Massenschubkraft erster Ordnung von der Kolbengruppe eines Zylinders, definiert durch die Beziehung

$$F^I = m.r.\omega^2.\cos\alpha$$

am symmetrischen Reihenvierzyliner zwar in der Summe an ganzer Maschine natürlich ausgeglichen, jedoch hier als der Ursacher des störenden Quermoments $M_q^{II}$ interessant

**$F^{II}$**  momentane störende resultierende harmonische Massenschubkraft zweiter Ordnung als die restliche Unwucht der ganzen Maschine, definiert durch die Beziehung

$$F^{II} = 4.K_{II}.m.r.\omega^2.\cos 2\alpha$$

**H**  einander orientierte Überhöhung der resultierenden Drehpunkte **S, P** des Ausgleichssystems in der Richtung von der Zylinderebenenspur v-v mit der idealen theoretischen Grösse

$$H = \lambda.l / K_{II} = l / (1+\lambda^2/4+15.\lambda^4/128...)$$

**J**  momentaner Wirkungspunkt der generierten Ausgleichskraft $-F^{II}$ in der Ausgleichsebene

**$K_{II}$**  Koeffizient der Amplitudengrösse von der harmonischen Strörungskraft-Komponente zweiter Ordnung von den Schubmassen der Kolbengruppe eines Zylinders, definiert laut Grammel als die Summe der ungeraden mathematischen unendlichen Reihe

$$K_{II} = (\lambda + \lambda^3/4 + 15.\lambda^5/128 + 35.\lambda^7/512 \ldots.).$$

$M_q{}^{II}$ resultierendes Quermoment, als harmonische Komponente zweiter Ordnung und als Produkt der anders einander ausgeglichenen harmonischen Kräfte $F^I$ erster Ordnung generiert, definiert durch die Beziehung

$$M_q{}^{II} = 2.m.r^2.\omega^2.\sin2\alpha$$

$O_1$ Zentrifugalkraft der Ausgleichgewichtsmasse $m_1$ von der Ausgleichwelle **1** in der Ausgleichsebene

$O_2$ Zentrifugalkraft der Ausgleichgewichtsmasse $m_2$ von der Ausgleichwelle **2** in der Ausgleichsebene

$O_3$ Zentrifugalkraft der Ausgleichgewichtsmasse $m_3$ von der Ausgleichwelle **3** in der Ausgleichsebene

$O_P$ achsparallel mit der Zeichnungsebene und in der Ausgleichsebene der Maschine rotierende resultierende Zentrifugalkraft des gesamten gegenlaufenden Systems

$O_S$ achsparallel mit der Zeichnungsebene und in der Ausgleichsebene der Maschine rotierende resultierende Zentrifugalkraft des gesamten mitlaufenden Systems

**P** Drehpunkt, als die Projektion der Rotationsachse der gegenlaufenden Ausgleichwelle **3** in die Zeichnungsebene

**Q** Projektion der Drehachse von der zentralen Kurbelwelle **5** in die Zeichnungsebene

$R_1$ Auszentrierung der Ausgleichgewichtsmasse $m_1$ aus der Rotationsachse der Ausgleichwelle **1** in der Ausgleichsebene

$R_2$ Auszentrierung der Ausgleichgewichtsmasse $m_2$ aus der Rotationsachse der Ausgleichwelle **2** in der Ausgleichsebene

$R_3$ Auszentrierung des Ausgleichgewichtsmasse $m_3$ aus der Rotationsachse der Ausgleichwelle **3** in der Ausgleichsebene

**S** Virtueller Drehpunkt, als Projektion der Rotationsachse von der Resultierenden $(O_1 + O_2)$ beider mitlaufenden Ausgleichsvektoren in die Zeichnungsebene, hier ebenfalls auch als der Schwerpunkt von den Drehpunkten $S_1$ und $S_2$ mit den zuständigen Gewichten $(m_1.R_1)$ und $(m_2.R_2)$

$S_1$ Drehpunkt, als die Projektion der Rotationsachse der mitlaufenden Ausgleichwelle **1** in die Zeichnungsebene

$S_2$ Drehpunkt, als die Projektion der Rotationsachse der mitlaufenden Ausgleichwelle **2** in die Zeichnungsebene

**T** gemeinsamer statischer Schwerpunkt der Eckpunkte $S_1$, $S_2$ und **P** vom Dreieck $\Delta S_1S_2P$ mit den dorthin zugehörigen Gewichten $(m_1.R_1)$, $(m_2.R_2)$ und $(m_3.R_3)$

$\alpha$ Kurbeldrehwinkel des ersten Zylinders von der ausgeglichenen Maschine, vom oberen Totenpunkt gerechnet

$\omega$ quasikonstante Winkelgeschwindigkeit der zentralen Kurbelwelle **5**

$\lambda$ Kurbelwellen- oder auch Pleuelstangenverhältnis, definiert als $\lambda$ = **r / l**

**+** der Sinn der mitlaufenden Umdrehung, identisch mit der Rotationsrichtung von der zentralen Kurbelwelle **5** der ausgeglichenen Maschine

**-** der Sinn der gegenlaufenden Umdrehung, umgekehrt gegen die Rotationsrichtung von der zentralen Kurbelwelle **5** der ausgeglichenen Maschine

## Patentansprüche

1. Multifunktionelles Ausgleichssystem als die Behelfseinrichtung einer Maschine mit der zentralen Welle **(5),** die durch die Restunwucht-Auswirkungen ihrer periodisch, jedoch ungleichmässig sich bewegenden mechanischen Glieder erregt ist, bestimmt für den simultanen Abbau mehrerer dynamisch störender harmonischer Produkte zweiter Ordnung, wobei ein davon zumindest die störende Schubkraft $(F^{II})$ ist,
**dadurch gekennzeichnet,**
**dass** dieses durch den Satz von drei einander achsparallelen Ausgleichwellen **(1)**, **(2)** und **(3)** gebildet ist, die kinematisch fest mit einer über die Winkelgeschwindigkeit $(\omega)$ verfügenden zentralen Welle **(5)** schlupflos so verbunden sind, dass diese mit den gleichen konstanten Winkelgeschwindigkeiten $(2.\omega)$ und $(-2.\omega)$ rotieren und dies einerseits paarweise in der identischen Winkelphase als die mit der zentralen Welle **(5)** mitlaufenden und beidseitig zur Zylinderebenenspur **(v-v)** angeordneten Wellen **(1)** und **(2)** und andererseits allein und entgegen als die gegenlaufende Ausgleichwelle **(3)**, wobei diese in der Ausgleichsebene der Maschine mit rotierenden statischen Aus-

gleichgewichten $(m_1.R_1)$, $(m_2.R_2)$ und $(m_3.R_3)$ versehend zu sein, ausserhalb des Mechanismus ausgeglichener Maschine so angebracht sind, dass die Drehpunkte $(S_1)$, $(S_2)$ a $(P)$ ihrer Rotationsachsen in der Ausgleichsebene die materiellen Eckpunkte eines symbolischen Dreiecks $(\Delta S_1 S_2 P)$ bilden, derer gemeinsamer statischer Schwerpunkt **(T),** durch die Grössen ihrer zugehörigen statischen Ausgleichgewichte **$(m_1.R_1)$, $(m_2.R_2)$** und **$(m_3.R_3)$** gewogen, auf der Wirkungslinie **(v-v)** der störenden Schubkraft **($F^{II}$)** liegt und dabei den Abstand zwischen dem Drehpunkt **(P)** von der allein gegenrotierenden Ausgleichwelle **(3)** und dem paarweisen Schwerpunkt **(S)** der gleich gewogenen Drehpunkten $(S_1)$, $(S_2)$ von den mitlaufenden behelflichen Ausgleichwellen **(1 ),(2)** halbiert.

2. Multifunktionelles Ausgleichssystem entsprechend Punkt 1,
   **dadurch gekennzeichnet,**
   **dass** beide mitlaufenden Ausgleichwelle (**1**),(**2**) auf der ausgeglichenen Maschine so angebracht sind, dass der paarweise Schwerpunkt (**S**) ihrer Drehpunkten $(S_1)$, $(S_2)$ mit den ihnen zugehörigen statischen Ausgleichsgewichten **$(m_1.R_1)$, $(m_2.R_2)$** innerhalb solcher Fläche liegt, die durch die senkrechte Projektion der Aussenkontur von den sich bewegenden ausgeglichenen Maschinen-Teilen in die Ausgleichsebene entsteht.

3. Multifunktionelles Ausgleichssystem entsprechend Punkte 1 und 2,
   **dadurch gekennzeichnet,**
   **dass** sein Antrieb von der zentralen Welle **(5)** mittels zweireihigen Antriebskettenrades (**4**) und zwei separaten einreihigen und axial versetzten Kettenübersetzungen mit den getriebenen Kettenrädern (**14**) durchgeführt ist.

4. Multifunktionelles Ausgleichssystem entsprechend Punkte 1, 2 oder 3,
   **dadurch gekennzeichnet,**
   **dass** wenigstens ein Bereich des Antriebskettensystems von der ausgeglichenen Maschine den Antrieb einer Ölpumpe (**8**) beinhaltet.

5. Multifunktionelles Ausgleichssystem entsprechend Punkt 1, 2 oder 4
   **dadurch gekennzeichnet,**
   **dass** das einreihige Antriebskettenrad (**4**) der zentralen Welle **(5)** zum Eingriff mit der inneren Seite jedes Gliedes der einreihigen Kette (**11**) im Verlaufe ihrer eines vollständigen Umlaufs auf die gleiche Stelle mehr als einmal kommt.

Fig. 1

Fig.2

Fig.3

Fig. 4

Fig. 5

Fig.6

Fig. 7